# FASCICULE DE BREVET EUROPEEN

(11) **EP 0 769 633 B1**
(45) Date de publication et mention de la délivrance du brevet: **18.07.2001**
(21) Numéro de dépôt: 96114786.5
(22) Date de dépôt: 16.09.1996
(51) Int. Cl.: F16D 13/75

(54) **Moyens à rampes pour dispositif de rattrapage de jeu destiné à équiper un embrayage à friction, notamment pou véhicule automobile**
Rampenvorrichtung für eine Nachstellvorrichtung einer Reibungskupplung, insbesondere für Kraftfahrzeuge
Ramp device for a friction clutch adjusting device, specially for automotive vehicles

(30) Priorité: 21.09.1995 FR 9511091
(43) Date de publication de la demande: 23.04.1997
(73) Titulaire: VALEO, 75017 Paris (FR)
(72) Inventeur: Thirion de Briel, Jacques, 92700 Colombes (FR); Blard, Michel, 92130 Issy les Moulineaux (FR)
(74) Mandataire: Gamonal, Didier

(56) Documents cités:
- FR-A- 2 424 442
- US-A- 5 320 205

## Description

La présente invention concerne des moyens à rampes pour dispositif de rattrapage de jeu destiné à équiper un embrayage à friction, notamment pour véhicule automobile, plus particulièrement un embrayage équipé d'un dispositif de rattrapage du jeu dû à l'usure des garnitures de friction, ledit dispositif opérant continûment au fur et à mesure de l'usure desdites garnitures.

Un embrayage à friction classique comporte généralement un plateau de réaction, éventuellement en deux parties pour formation d'un volant amortisseur, calé en rotation sur un premier arbre, usuellement un arbre menant tel que le vilebrequin du moteur à combustion interne, et supportant par sa périphérie externe un couvercle auquel est rattaché au moins un plateau de pression.

Le plateau de pression est solidaire en rotation du couvercle et du plateau de réaction tout en pouvant se déplacer axialement sous la sollicitation de moyens élastiques à action axiale commandés, généralement un diaphragme métallique prenant appui sur le couvercle, tandis qu'un disque de friction, portant des garnitures de friction à sa périphérie externe, solidaire en rotation d'un arbre, usuellement un arbre mené tel que l'arbre d'entrée de la boîte de vitesses, est intercalé entre le plateau de pression et le plateau de réaction de façon à être serré entre eux lorsque l'embrayage est en position d'engagement.

Le diaphragme commande le déplacement axial du plateau de pression lorsqu'il est actionné par une butée de débrayage. Au cours de la durée de vie d'un tel embrayage, les garnitures de friction ainsi que les contre-matériaux, plateau de pression et plateau de réaction, s'usent, ce qui provoque une variation de la force de serrage entre le disque de friction, d'une part, et les plateaux de pression et de réaction, d'autre part, en raison des modifications des conditions de travail du diaphragme. La course d'embrayage varie également, ainsi que la force nécessaire pour débrayer. En dotant un tel embrayage d'un dispositif de rattrapage du jeu dû à l'usure des garnitures, on évite ces inconvénients.

On a déjà proposé, selon le document FR-A-2 424 442, de réaliser un dispositif de rattrapage en disposant entre le diaphragme et le plateau de pression deux bagues annulaires portant des rampes complémentaires, une première bague annulaire étant fixe en rotation par rapport au plateau de pression, la seconde étant déplaçable en rotation, par rapport à celui-ci et à la première, le déplacement relatif circonférentiel des deux bagues conduisant, du fait des rampes complémentaires qu'elles portent, à un écartement des bagues dans le sens axial compensant ladite usure, cet écartement simulant une augmentation de l'épaisseur axiale du plateau de pression ; pour son déplacement relatif en rotation, la seconde bague est munie à sa périphérie d'un secteur denté dont les dents engrènent avec une vis sans fin disposée de manière tangentielle et montée à rotation sur un axe porté par le couvercle de l'embrayage ; la vis sans fin est susceptible d'être entraînée en rotation, par l'intermédiaire d'un accouplement unidirectionnel, par un tambour porté par le même axe qui porte la vis sans fin, lequel tambour est, en cas d'usure des garnitures du disque de friction, entraîné lui-même en rotation par une patte ménagée à la périphérie du diaphragme qui coopère avec les bords d'une encoche que présente le tambour à sa périphérie ; l'accouplement unidirectionnel est disposé en sorte que la vis sans fin est entraînée par le tambour, qui constitue en quelque sorte une pièce d'armement du dispositif, lorsque celui-ci est lui-même entraîné en rotation par la patte du diaphragme lors du débrayage, la rotation de la vis sans fin conduisant à une rotation de la seconde bague, comme cela a été dit ci-dessus.

Un accouplement unidirectionnel disposé entre la vis sans fin et l'axe qui la supporte permet à celle-ci de conserver sa position en rotation après chaque réglage.

Dans un tel dispositif, selon le document FR-A-2 424 442, la seconde bague annulaire, qui constitue les moyens à rampes au sens de la présente demande, comprend les rampes proprement dites réparties circonférentiellement l'une à la suite de l'autre, ainsi qu'un secteur denté, ou denture, et partie transversale où sont ménagées les rampes. Comme on le voit, une telle disposition est encombrante axialement et se prête mal à une fabrication industrielle aisée.

La présente invention a pour but de pallier ces inconvénients.

Selon l'invention, des moyens à rampes pour dispositif de rattrapage de jeu destiné à équiper un embrayage à friction à diaphragme, comportant des rampes réparties circonférentiellement destinées à coopérer avec le plateau de pression de l'embrayage, des moyens d'appui destinés à recevoir l'effort axial du diaphragme de l'embrayage et une denture destinée à leur entraînement en rotation, sont caractérisés par le fait qu'ils sont constitués d'un anneau présentant sur une de ses faces des rampes alternées circonférentiellement avec des zones d'appui constituant lesdits moyens d'appui.

Avantageusement, la denture s'étend dans un plan perpendiculaire à l'axe de l'anneau.

De préférence, l'une des zones d'appui porte ladite denture à sa périphérie externe ; ladite denture s'étend dans le plan de la zone d'appui. Selon un autre mode de réalisation, ladite une des zones d'appui est prolcngée à sa périphérie externe par un rebord incliné sur l'axe de l'anneau et se terminant selon un retour transversal muni à sa périphérie de ladite denture.

Avantageusement, les zones d'appui sont constituées par l'arête supérieure arrondie d'emboutis disposés en arcs de cercle centrés sur l'axe de l'anneau.

De préférence, les zones d'appui et les rampes sont centrées par rapport à la largeur de l'anneau ; les rampes sont destinées à coopérer avec des plots portés par le plateau de pression.

En variante, les zones d'appui et les rampes sont décalées radialement les rampes sont destinées à coopérer avec des rampes complémentaires portées par le plateau de pression.

Pour mieux faire comprendre l'objet de l'invention, on va en décrire maintenant, à titre d'exemples, purement illustratifs et non limitatifs, des modes de réalisation représentés sur les dessins annexés.
- la figure 1 est une vue partielle en coupe d'un embrayage équipé d'un dispositif de rattrapage de jeu selon l'invention
- la figure 2 est une vue partielle en plan de l'embrayage de la figure 1 partiellement coupé et arraché ;
- la figure 3 est une vue partielle en coupe du plateau de pression et des moyens à rampes de l'embrayage des figures 1 et 2 ;
- les figures 4 à 6 montrent le support du dispositif de rattrapage, équipé de l'organe élastique : la figure 4 est une vue en plan, la figure 5 est une vue de dessous par rapport à la figure 4, et la figure 6 est une coupe selon VI-VI de la figure 4 ;
- les figures 7 à 9 montrent l'organe élastique seul dans les positions où il est représenté, respectivement, aux figures 5, 4 et 6 ;
- la figure 10 est une vue partielle en perspective montrant les moyens à rampes
- les figures 11 et 12 sont des vues en coupe de la figure 10, respectivement selon les lignes XI-XI et XII-XII de cette figure ;
- les figures 13A à 13D montrent partiellement en coupe diverses positions des éléments constitutifs de l'embrayage ; sur la figure 13A l'embrayage est embrayé, garnitures neuves ; sur la figure 13B l'embrayage est débrayé, garnitures neuves ; sur la figure 13C l'embrayage est embrayé garnitures usées ; sur la figure 13D l'embrayage es débrayé, garnitures usées, jeu rattrapé ;
- les figures 14 et 15 sont des vues partielles en perspective, respectivement légèrement de droite et légèrement de gauche par rapport au support, d'une variante de dispositif de rattrapage de jeu selon l'invention ;
- les figures 16 à 22 montrent une autre variante de dispositif de rattrapage de jeu selon l'invention ;

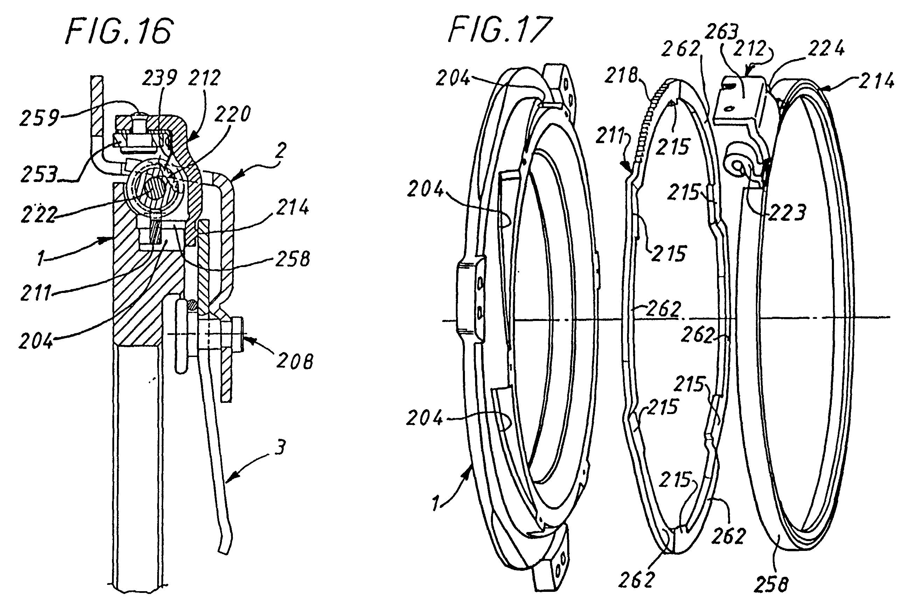

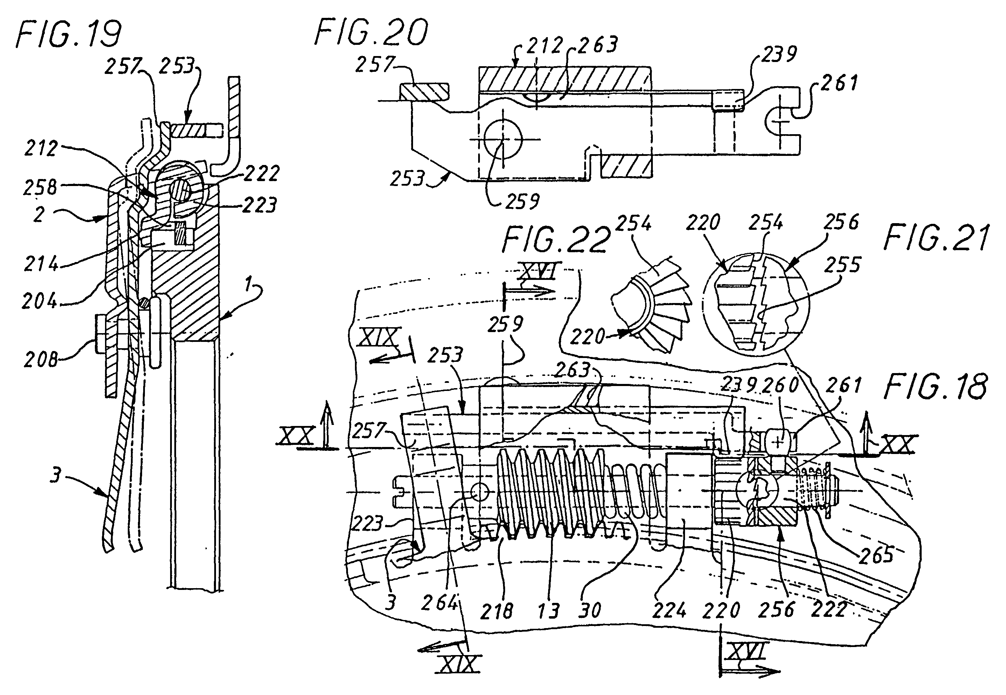

- la figure 16 est une vue partielle en coupe de l'embrayage, équipé de cette variante, selon XVI-XVI de la figure 18
- la figure 17 est une vue éclatée en perspective montrant le plateau de pression, les moyens à rampes et les moyens d'appui de l'embrayage de la figure 16 ;
- la figure 18 est une vue partielle en plan de l'embrayage des figures 16 et 17, partiellement coupé et arraché ;
- la figure 19 est une vue en coupe selon XIX-XIX de la figure 18
- la figure 20 est une vue en coupe selon XX-XX de la figure 18 ;
- la figure 21 est une vue agrandie de la loupe de la figure 18 ;
- la figure 22 est une vue partielle de la face latérale de la roue à rochet montrée sur la figure 18 notamment.

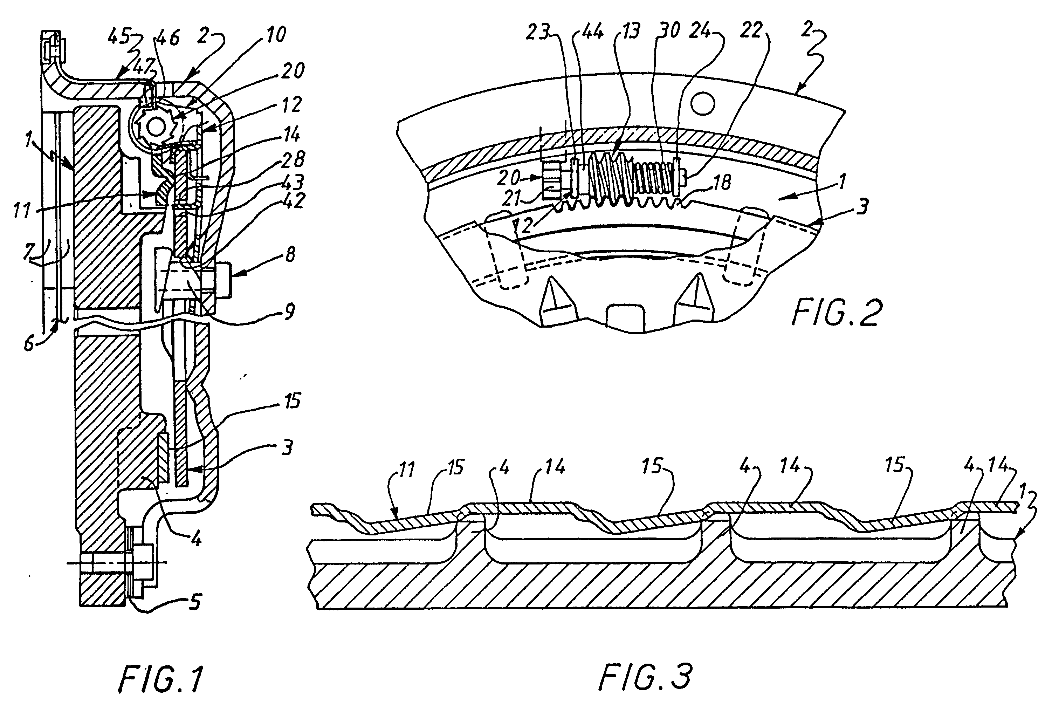

En se reportant aux figures 1 à 12, on voit un mécanisme d'embrayage à friction, notamment pour véhicule automobile, qui comprend un plateau de pression 1 destiné à coopérer avec un disque de friction 6, portant à sa périphérie externe des garnitures de friction 7, qui coopère lui-même avec un plateau de réaction. Le plateau de réaction, non représenté, est destiné à être calé en rotation sur un arbre menant, tel que le vilebrequin du moteur à combustion interne. Le disque de friction 6 est solidaire en rotation d'un arbre mené tel que l'arbre d'entrée de la boîte de vitesses.

Le plateau de pression 1 est solidaire en rotation d'un couvercle 2 de forme creuse par l'intermédiaire de languettes tangentielles 5 qui, élastiques, constituent en même temps des moyens de rappel du plateau de pression 1 vers le couvercle 2.

Le plateau de pression 1, tout en étant solidaire en rotation du couvercle 2, est donc déplaçable axialement par rapport au couvercle 2 sous la sollicitation de moyens élastiques à action axiale commandés, ici un diaphragme 3 monté articulé sur le couvercle 2 grâce à des colonnettes 8 portées par le fond du couvercle 2 troué centralement.

Pour compenser le jeu dû à l'usure des garnitures 6 du disque de friction 7, et dans une moindre mesure l'usure des plateaux de pression 1 et de réaction dont les faces, dites de friction, s'usent au contact des garnitures 6 du disque 7, il est prévu un dispositif de rattrapage de jeu 10.

Le dispositif de rattrapage de jeu 10 comprend des moyens à rampes 11 disposées circonférentiellement. Plus précisément, ces moyens à rampes 11, mieux visibles sur les figures 3, 10, 11 et 12, sont constitués d'un anneau en tôle découpée et emboutie de façon à présenter des rampes 15 alternées circonférentiellement avec des zones d'appui 14 constituées par l'arête supérieure arrondie d'emboutis disposés en arcs de cercle centrés sur l'axe de l'embrayage.

Le plateau de pression 1 présente, sur sa face tournée vers le fond du couvercle 2, des plots 4 répartis circonférentiellement à une distance l'un de l'autre qui correspond à celle qui sépare circonférentiellement deux rampes 15 successives, les plots 4 étant destinés à coopérer chacun avec une rampe 15.

Pour compenser le jeu dû à l'usure des garnitures 6 du disque de friction 7, et dans une moindre mesure l'usure des plateaux de pression 1 et de réaction dont les faces, dites de friction, s'usent au contact des garnitures 6 du disque 7, il est prévu un dispositif de rattrapage de jeu 10.

Le dispositif de rattrapage de jeu 10 comprend des moyens à rampes 11 disposées circonférentiellement. Plus précisément, ces moyens à rampes 11, mieux visibles sur les figures 3, 10, 11 et 12, sont constitués d'un anneau en tôle découpée et emboutie de façon à présenter des rampes 15 alternées circonférentiellement avec des zones d'appui 14 constituées par l'arête supérieure arrondie de crevés disposés en arcs de cercle centrés sur l'axe de l'embrayage.

Le plateau de pression 1 présente, sur sa face tournée vers le fond du couvercle 2, des plots 4 répartis circonférentiellement à une distance l'un de l'autre qui correspond à celle qui sépare circonférentiellement deux rampes 15 successives, les plots 4 étant destinés à coopérer chacun avec une rampe 15.

Les moyens à rampes 11 sont placés axialement entre le diaphragme et le plateau de pression 1 en sorte que les plots 4 reçoivent les rampes 15 et le diaphragme 3 coopère avec les zones d'appui 14 qui constituent ainsi les moyens d'appui par l'intermédiaire desquels le diaphragme 3 agit sur le plateau de pression 1. Cette disposition est économique et simple.

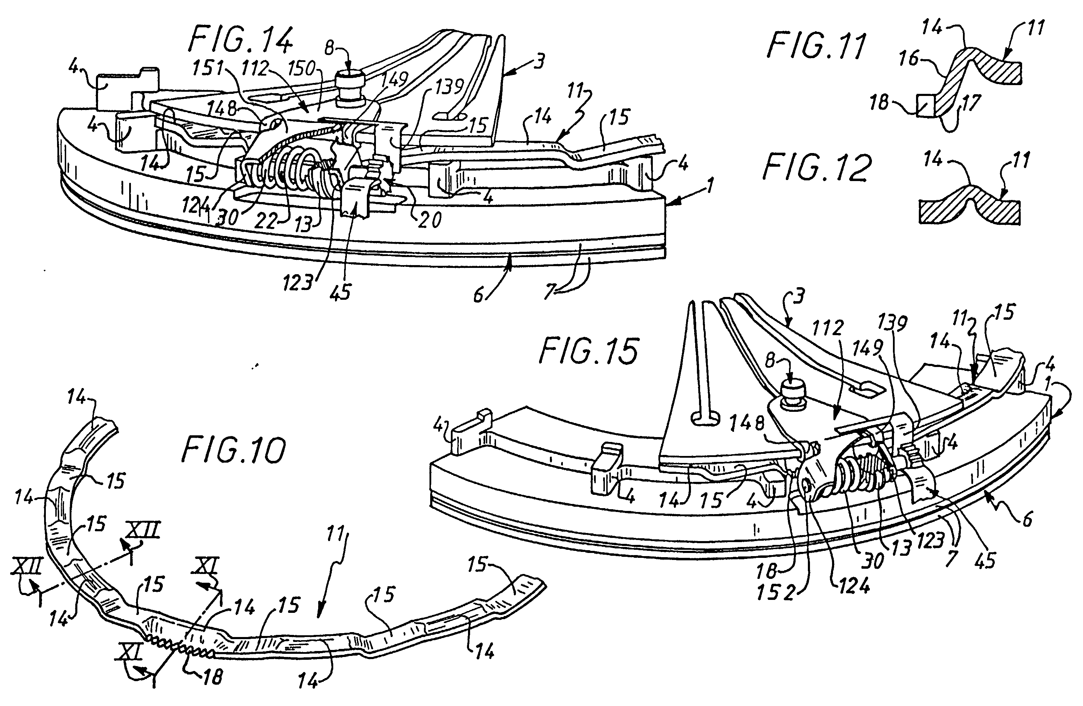

L'une des zones d'appui 14 des moyens à rampes 11 est prolongée à sa périphérie externe par un rebord 16 incliné sur l'axe de l'embrayage se terminant selon un retour 17 transversal, c'est-à-dire s'étendant dans un plan perpendiculaire à l'axe de l'embrayage, muni à sa périphérie d'une denture 18, comme cela est mieux visible sur la figure 11.

Le dispositif de rattrapage de jeu 10 comprend par ailleurs une roue à rochet 20 à dents inclinées 21 solidaire d'un axe 22 qui porte également une vis sans fin 13 ; le filet et le pas de la vis sans fin 13 sont adaptés à la denture 18 des moyens à rampes 11 ; la vis sans fin 13 est amenée à coopérer avec la denture 18 dans les conditions qui seront décrites ci-après.

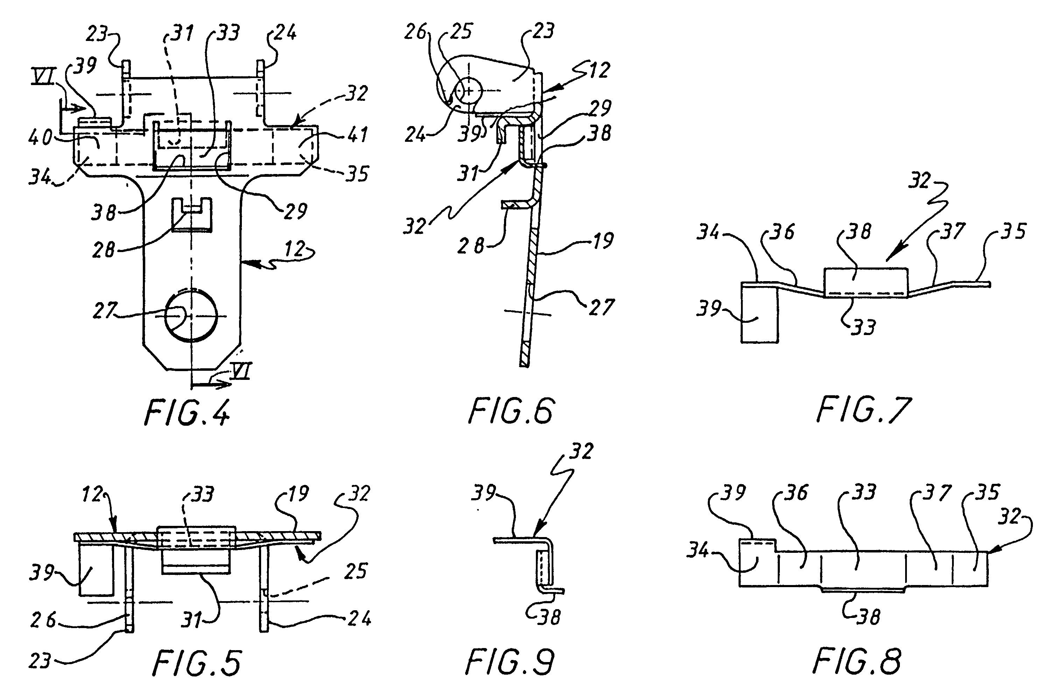

L'axe 22 de la roue à rochet 20 est porté à rotation par un support 12, mieux visible sur les figures 4 à 6, en tôle découpée et pliée, ayant un corps 19 pratiquement plan, en forme de croix, dont la partie supérieure porte deux ailes 23, 24 destinées à supporter l'axe 22 ; à cet effet, l'une des ailes, l'aile 24, porte un trou circulaire 25 adapté au diamètre de l'axe 22, tandis que l'autre aile, l'aile 23, porte une échancrure 26, à fond circulaire adapté au diamètre de l'axe 22, s'étendant en oblique par rapport au corps 1 9 du support 12.

La partie inférieure du corps 19 du support 12 présente une ouverture 27 circulaire adaptée à être traversée par le corps cylindrique 9 d'une colonnette 8 supportant le diaphragme 3.

En son centre, le corps 19 du support 12 porte une patte 28, obtenue ici par découpage et pliage, s'étendant perpendiculairement au corps 19 du même côté que les ailes 23 et 24.

Dans la zone située entre celle qui porte les ailes 23 et 24 et la patte 28, le corps 19 est également découpé pour réaliser un passage 29, globalement rectangulaire, et plié pour obtenir un crochet 31 dont l'extrémité est parallèle au corps 19 en étant dirigée vers la patte 28.

De part et d'autre du passage 29, le corps 19 présente des bras 40, 41.

Le support 12 est adapté à recevoir un organe élastique 32, mieux visible sur les figures 7 à 9 ; l'organe élastique 32 est une bande de forme générale rectangulaire pliée ayant une partie centrale 33 et deux parties d'extrémité 34, 35 parallèles à la partie centrale 33 à laquelle elles sont raccordées par des parties obliques 36, 37 ; la partie centrale 33 porte sur sa tranche un rabat 38 qui est perpendiculaire à la partie centrale 33 et qui s'étend, par rapport à cette partie centrale 33, du côté où l'angle embrassé par les parties obliques 36, 37 est inférieur à 180°. L'une des parties d'extrémité, ici la partie 34, est légèrement plus large, du côté opposé à celui où est situé le rabat 38, en portant également sur sa tranche, perpendiculairement, un rabat constituant un cliquet anti-retour 39 dont le rôle apparaîtra ci-après.

Comme cela est visible sur les figures 4 à 6 qui montrent le support 12 équipé de l'organe élastique 32, celui-ci est disposé en sorte que ses parties d'extrémité 34, 35 coopèrent avec la face des bras 40, 41 du corps 19 tournée vers les ailes 23, 24 ; la partie centrale 33 de l'organe élastique 32 coopère par son bord supérieur, par rapport aux figures 4 et 6, avec la partie horizontale du crochet 31 vers laquelle elle est poussée élastiquement par le rabat 38 qui prend appui sur le bord inférieur du passage 29 ; dans cette position de l'organe élastique 32, sa partie centrale 33 est à distance du plan du passage 29, du fait de l'obliquité des parties obliques 36 et 37, et le cliquet anti-retour 39 est au droit du bord supérieur du bras 40, décalé latéralement par rapport à l'aile la plus proche, à savoir l'aile 23.

Le support 12 est adapté à être monté sur le diaphragme 3 avant que celui-ci ne soit solidarisé au couvercle ; le support 12 est placé sur la face extérieure du diaphragme 3 en faisant chevaucher le bord circonférentiel externe du diaphragme 3 par le crochet 31 du support 12 et de telle sorte que l'ouverture 27 du corps 19 du support 12 soit au droit d'un passage 42 du diaphragme 3 pour le corps 9 d'une colonnette 8 ; une fente 43 s'étendant circonférentiellement peut être prévue dans le diaphragme 3, comme cela est représenté, pour recevoir la patte 28 du corps 19 du support 12 et assurer ainsi son positionnement et son maintien dans le sens circonférentiel. Il suffit alors de solidariser le diaphragme 3 au couvercle 2 en sertissant les colonnettes 8, comme habituellement, pour solidariser définitivement le support 12 au diaphragme 3.

Pour le positionnement du support 12 dans le sens circonférentiel, la fente 43 prévue dans le diaphragme 3 pourrait être supprimée et remplacée par une échancrure prévue sur le bord du diaphragme 3 dans laquelle prendrait place le crochet 31 du support 12 : bien entendu, selon cette variante non représentée, la patte 28 du support 12 serait supprimée également.

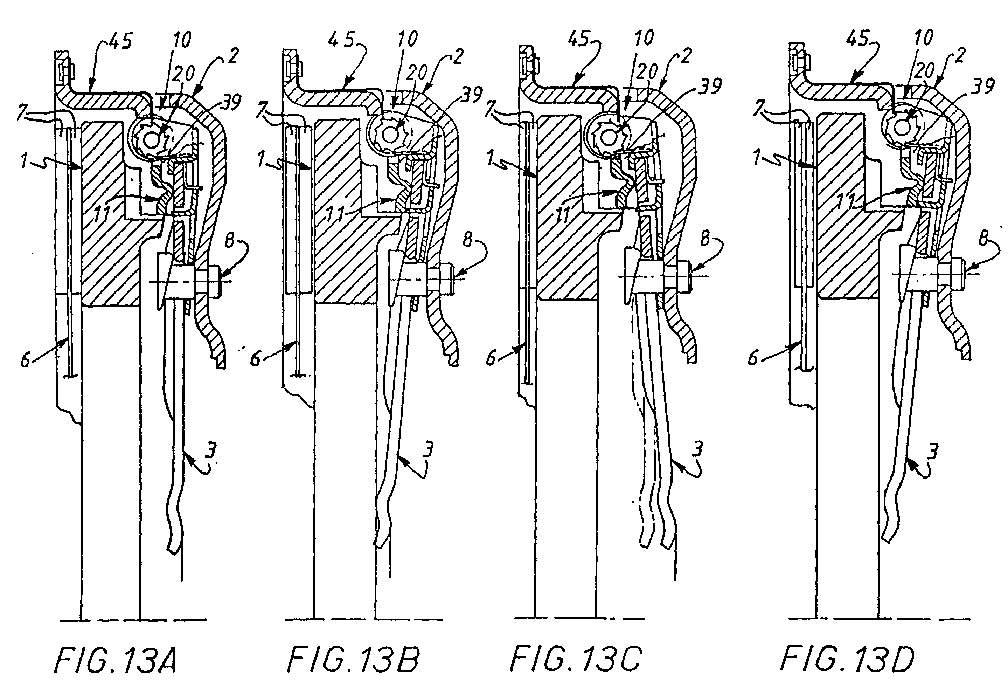

A légère distance de la roue à rochet 20, l'axe 22 porte une collerette 44 adjacente à la vis sans fin 13 ; autour de l'axe 22, du côté opposé à celui où est placée la roue à rochet 20, par rapport à la vis sans fin 13, est placé un ressort hélicoïdal 30 constituant le moyen élastique de rattrapage, comme décrit ci-dessous ; l'extrémité libre de l'axe 22 est alors introduite dans le trou 25 de l'aile 24 du support 12 ; en comprimant le ressort 30, la partie de l'axe 22 comprise entre la collerette 44 et la roue à rochet 20 est alors introduite dans l'échancrure 26 de l'aile 23 du support 12 : dans cette position, la roue à rochet 20 est au droit du cliquet anti-retour 39 qui par coopération avec les dents 21 inclinées de la roue à rochet 20, d'une part, maintient élastiquement l'axe 22 au fond de l'échancrure 26 et, d'autre part, empêche de tourner la roue à rochet 20, ainsi que la vis sans fin 13, dans le sens contraire à celui des aiguilles d'une montre, par rapport aux figures 1 et 13A à 13D.

Le support 12, portant la roue à rochet 20, dont l'axe 22 supporte la vis sans fin 13 et le ressort hélicoïdal 30, étant solidaire du diaphragme 3, se déplace avec lui lors des opérations de débrayage et de réembrayage, et ce par rapport au couvercle 2 ; celui-ci porte à sa périphérie une lame élastique de butée 45 s'étendant pour une grande partie à l'extérieur du couvercle 2 auquel elle est fixée ici par rivetage à la faveur du rebord radial de fixation du couvercle 2 au plateau de réaction, et ayant une extrémité 46 qui le traverse en s'étendant le long d'un retour transversal 47 pour coopérer avec les dents inclinées 21 de la roue à rochet 20 globalement de manière diamétralement opposée par rapport au cliquet anti-retour 39 ; on comprendra que, grâce à cette disposition, en déplaçant la roue à rochet 20 de la droite vers la gauche, par rapport à la figure 1, l'extrémité 46 de la lame 45, par coopération avec le retour transversal 47 du couvercle 2, joue le rôle d'un point fixe pour les dents 21 de la roue à rochet 20 de sorte que celle-ci est amenée à tourner dans le sens horaire ; lorsque la roue à rochet 20, au retour, est déplacée de la gauche vers la droite, l'élasticité de la lame 45 et l'inclinaison des dents 21 font que celle-ci soulèvent la lame 45, en étant maintenues fixes en rotation par la pression du cliquet anti-retour 39.

Le dispositif de rattrapage de jeu qui vient d'être décrit fonctionne comme suit.

La figure 13A représente l'embrayage engagé, les garnitures 7 du disque de friction 6 étant à l'état neuf et serrées entre le plateau de réaction, non représenté, et le plateau de pression 1. Dans cette position, la collerette 44 de l'axe 22 est en butée avec l'aile 23 du corps 19, poussée par le ressort hélicoïdal 30, comme représenté sur la figure 2. Par ailleurs, l'extrémité de la lame 45 est au pied d'une dent de la roue à rochet 20 et le cliquet anti-retour 39 sur le sommet d'une dent, comme montré sur la figure 13A.

Lorsque l'embrayage est débrayé, le diaphragme 3 a basculé autour des colonnettes 8 entraînant à sa périphérie le support 12 vers le fond du couvercle 2 ; le support 12 dépassant radialement du diaphragme 3 par sa partie supérieure qui porte les ailes 23, 24, il peut se faire que le support 12 vienne buter contre le couvercle avant que le diaphragme n'ait atteint sa position de fin de course de débrayage ; c'est la raison pour laquelle l'organe élastique 32 présente des parties obliques 36, 37 qui sont en fin de sa course écrasées par le diaphragme qui se détache de l'extrémité transversale du crochet 31 dans lequel il est monté avec jeu, comme cela est montré sur la figure 13B qui représente l'embrayage en fin de débrayage, les garnitures 7 du disque de friction 6 étant encore neuves. Lors du déplacement du support 12 par le diaphragme 3, l'extrémité de la lame élastique 45 a suivi la rampe inclinée constituée par la dent dans le pied de laquelle elle se trouvait dans l'étape précédente, les dents 21 de la roue à rochet 20 étant réalisées en sorte que, lors de cette course de débrayage garnitures neuves, l'extrémité de la lame 45 ne saute pas une dent, ainsi d'ailleurs que le cliquet anti-retour 39 qui, toujours sur le sommet de la même dent, maintient la roue à rochet 20.

Lorsque les garnitures 7 s'usent, comme on le sait le plateau de pression 1, toujours soumis à l'effort axial du diaphragme 3, se rapproche du plateau de réaction qui est fixe axialement comme le couvercle 2 ; la périphérie du diaphragme 3 se rapproche donc du plateau de réaction, donc de l'extrémité ouverte du couvercle 2, en entraînant dans son basculement le support 12 ; la roue à rochet 20 se rapproche également du plateau de réaction mais, comme l'extrémité de la lame 45 était en pied de dent avant usure, la roue à rochet 20 est en butée sur la lame 45 lorsqu'elle se déplace en cours d'usure. Dès lors, ladite roue 20 tourne autour de son axe dans le sens horaire, sens pour lequel le cliquet anti-retour 39 n'assure pas sa fonction mais peut sauter d'une dent à l'autre ; l'embrayage engagé, garnitures usées, est représenté sur la figure, 13C. Cet entraînement en rotation de la roue à rochet 20 conduit la vis sans fin 13 à tourner également sur son axe ; les moyens de rampes 11 étant immobilisés par rapport au couvercle 3 sous l'effet de la charge du diaphragme 3, la vis sans fin 13 qui engrène avec la denture 18 des moyens de rampes 11 se visse en quelque sorte sur cette denture 18 en comprimant le ressort hélicoïdal 30, le sens du filet de la vis sans fin 13 étant prévu en sorte qu'il soit ainsi.

Lors de l'opération de débrayage qui suit la phase d'usure qui vient d'être décrite, le plateau de pression 1 libère les garnitures 7 en s'éloignant d'elles sous l'action des languettes tangentielles 5 qui le ramènent vers le fond du couvercle 2, ainsi que les moyens à rampes 11 en contact avec le diaphragme 3 par leurs zones d'appui 14 et avec les plots 4 du plateau de pression 1 par leurs rampes 15. Le ressort hélicoïdal 30 sollicite la vis sans fin 13 vers l'aile 23, qu'elle a quittée en phases d'usure, c'est-à-dire de la droite vers la gauche par rapport à la figure 2 ; la charge du diaphragme 3 n'étant plus appliquée sur les moyens à rampes 11, le seul effort à vaincre pour pouvoir faire tourner ces moyens à rampes 11 par rapport au plateau de pression 1 est l'effort de rappel des languettes tangentielles 5. Si la charge du ressort hélicoïdal 30 est suffisante pour vaincre cet effort, alors le ressort 30 déplace la vis sans fin 13, empêchée de tourner sur elle-même par le cliquet anti-retour 39, qui entraînera la denture 18 : en tournant sur elles-mêmes, les rampes 15 des moyens à rampes 11, par coopération avec les plots 4 du plateau de pression 1, éloigneront le plateau de pression 1 du fond du couvercle 2, augmentant ainsi la distance axiale entre la face de travail du plateau de pression 1 et les zones d'appui 14 des moyens à rampes 11, rattrapant ainsi le jeu dû à l'usure des garnitures 7. La charge du ressort hélicoïdal 30 étant fonction de la quantité dont il aura été comprimé par la vis sans fin 13 durant les phases d'usure, on voit que plusieurs opérations d'embrayage et de débrayage peuvent être nécessaires avant que le dispositif de rattrapage de jeu 10 n'entre en phase de rattrapage proprement dite, ceci étant fonction du dimensionnement relatif des pièces concernées. A titre d'exemple, celles-ci peuvent être réalisées de telle sorte que cette phase de rattrapage proprement dite n'intervienne qu'après une usure correspondant à trois dixièmes de millimètres ; par ailleurs, on voit également qu'il est impossible au dispositif 10 selon l'invention de rattraper un quelconque jeu sans qu'il y ait une usure effective.

Dans la variante qui vient d'être décrite, l'axe 22, la vis sans fin 13, la collerette 44 et la roue à rochet 21 sont d'une seule pièce ; bien entendu, la vis sans fin 13 pourrait être une pièce distincte et pourvue d'un alésage, ledit alésage et l'axe lui-même étant agencés de telle sorte que la vis sans fin peut coulisser le long de l'axe tout en étant solidaire en rotation dudit axe.

Les figures 14 et 15 représentent une variante de dispositif de rattrapage de jeu. Sur ces figures, les pièces identiques à celles précédemment décrites, ou jouant le même rôle, ont été désignées par la même référence, ou par cette référence augmentée de cent ; dès lors, cette variante sera succinctement décrite. Ici, le support 112 comporte un flasque 150 de forme globalement triangulaire serti sur le diaphragme 3 par une colonnette 8, deux crochets 148, 149, à distance circonférentielle l'un de l'autre, enserrant le diaphragme 3 à sa périphérie ; le flasque 150 est prolongé extérieurement par une casquette 151 plus inclinée sur l'axe de l'embrayage que ne l'est le flasque 150 ; la casquette 151 porte latéralement, sur chacun de ses côtés, une aile, respectivement 123, 124 ; les ailes 123, 124 supportent, comme précédemment les ailes 23, 24, l'axe 22 équipé de la roue à rochet 20, la vis sans fin 13, le ressort 30 ; la roue à rochet 20 est au droit de la lame élastique 45 portée par le couvercle, non représenté sur ces figures, et du cliquet anti-retour 139, ici assujetti au flasque 150 du support 112, par exemple par soudage. L'extrémité libre de l'axe 22 est aplatie en 152 en sorte que l'on dispose d'un sous-ensemble, constitué par le support 112 équipé du cliquet anti-retour 139, de l'axe 22 portant la roue à rochet 20, la vis sans fin 13 et le ressort 30, prêt à être monté sur le diaphragme et serti par une colonnette 8.

Les figures 16 à 22 montrent une variante de dispositif de rattrapage selon l'invention ; sur ces figures, les pièces identiques à celles précédemment décrites à propos des figures 1 à 13, ou jouant le même rôle, sont désignées par la même référence, ou par cette référence augmentée de deux cents.

Le fonctionnement de cette variante étant identique à celui des variantes précédentes, seules seront décrites les particularités constructives qui distinguent cette variante.

Comme le montre bien la figure 17, selon cette variante, les moyens à rampes 211 sont munis de rampes 215 et de parties planes transversales 262, alternées circonférentiellement, et d'une denture 218 ; les moyens d'appui 214 pour le diaphragme 3 sont prévus sur une pièce annulaire indépendante des moyens à rampes 211 et dont la jupe cylindrique 258 est adaptée à coopérer axialement avec les parties planes transversales 262 des moyens à rampes 211 dont les rampes 215 sont adaptées à coopérer avec, ici, des rampes complémentaires 204 du plateau de pression 1 ; bien entendu, ces rampes complémentaires 204 pourraient être remplacées par des plots comme dans la variante précédente, et réciproquement d'ailleurs.

Selon cette variante également, un support 21 2 est solidaire des moyens d'appui 214 ; le support 212 comprend une sorte de casquette, à section en L, dont la paroi frontale 263 s'étend axialement, flanquée latéralement de deux ailes ou oreilles 223, 224 destinées à supporter un axe 222 ; le support 212 est issu de la jupe 258 des moyens d'appui 214 pour le diaphragme 3.

Comme cela est visible sur la figure 18, l'axe 222 est solidaire d'une roue à rochet 220 ; après avoir été introduit dans l'oreille 224, roue à rochet' 220 à l'extérieur, le ressort hélicoïdal 30 puis la vis sans fin 13 sont enfilés sur l'axe introduit ensuite dans l'oreille 223 ; une goupille 264 solidarise en rotation la vis sans fin 13 et l'axe 222. La roue à rochet 220 coopère avec un cliquet anti-retour 239 porté par la paroi frontale 263 du support 212.

La roue à rochet 220 porte, sur sa face transversale opposée à celle qui est tournée vers l'oreille 224, des dents 254 inclinées circonférentiellement, visibles sur la loupe de la figure 21 et sur la figure 22 ; l'axe 222 est prolongé au-delà de la roue à rochet 220 et porte à rotation, sur cette extrémité, une noix 256 dont la face tournée vers la roue à rochet 220 porte des dents 255 conjuguées par rapport aux dents 254 et visibles sur la loupe de la figure 21 un léger ressort 265 assure la coopération des dents 254 et 255, notamment dans le sens menant, la roue à rochet 220 et la noix 256 jouant le rôle, grâce aux dents 254, 255, d'un accouplement unidirectionnel entre l'axe 222 et un levier 253, comme cela va être décrit maintenant la noix 256 porte à sa périphérie un pivot radial 260 en forme générale d'olive que chevauche l'extrémité du levier 253 grâce à une échancrure 261 qui y est ménagée. Le levier 253 est articulé autour d'un axe 259 porté par la paroi frontale 263 du support 212 ; l'autre extrémité du levier 253, opposée à celle qui porte l'échancrure 261, coopère avec une patte radiale 257 que présente le diaphragme 3 à sa périphérie pour la manoeuvre du levier 253 en phases d'usure. En effet, la patte 257 du diaphragme 3 étant au contact du levier 253 en un point situé sur un rayon plus grand que celui sur lequel sont placés les moyens d'appui 214 qui, comme on le sait, se déplacent axialement en phases d'usure, l'effet de l'usure sur le levier 253 est ainsi multiplié ; un autre effet multiplicateur est obtenu à travers le levier 253 dont l'axe 259 est plus proche du point de contact avec la patte radiale 257 qu'il ne l'est de l'échancrure 261. Ainsi, par le jeu de ces divers bras de levier, on peut par exemple s'arranger pour que, lors d'une course normale de débrayage et d'embrayage sans usure les mêmes dents 254 et 255 restent en contact ; en phases d'usure, on saute d'une dent à l'autre, ce qui chaque fois fait tourner la vis sans fin 13 qui progressivement comprime le ressort hélicoïdal 30 en se vissant sur la denture 218 embrayage embrayé ; lorsque la charge du ressort 30 atteint celle des languettes tangentielles qui rappellent le plateau de pression 1, le ressort hélicoïdal 30 déplace en translation la vis sans fin 13 qui déplace en rotation les moyens à rampes 211, embrayage débrayé, comme dans les variantes précédentes.

On appréciera, à propos des variantes des figures 1 à 15, que le nombre de pièces est réduit puisque les moyens à rampes 11 portent les moyens d'appui 14 pour le diaphragme 3. Il y a également, selon ces variantes, un effet multiplicateur : ainsi, pour une course de débrayage donnée, lors du réembrayage à partir de la position représentée à la figure 13D, l'embrayage se retrouve dans la position montrée figure 13A.

Ainsi qu'on l'aura compris, les usures sont détectées grâce à la lame 45, ou à la patte 257 ; ainsi, le détecteur d'usure (45, 257) peut être porté par différents composants de l'embrayage.

## Revendications

1. Moyens à rampes pour dispositif de rattrapage de jeu destiné à équiper un embrayage à friction à diaphragme, comportant des rampes (15, 215) réparties circonférentiellement destinées à coopérer avec le plateau de pression (1) de l'embrayage, des moyens d'appui destinés à recevoir l'effort axial du diaphragme (3) de l'embrayage et une denture (18, 218) destinée à leur entraînement en rotation, caractérisé par le fait qu'ils sont constitués d'un anneau présentant sur l'une de ses faces des rampes (15, 215) alternées circonférentiellement avec des zones d'appui (14, 262) constituant lesdits moyens d'appui.

2. Moyens à rampes selon la revendication 1, caractérisés par le fait que denture (18, 218) s'étend dans un plan perpendiculaire à l'axe de l'anneau.

3. Moyens à rampes selon la revendication 2, caractérisés par le fait que l'une des zones d'appui (14, 262) porte ladite denture (18, 218) à sa périphérie externe.

4. Moyens à rampes selon la revendication 3, caractérisés par le fait que ladite denture (218) s'étend dans le plan de la zone d'appui (262).

5. Moyens à rampes selon la revendication 3, caractérisés par le fait que ladite une des zones d'appui (14) est prolongée à sa périphérie externe par un rebord (16) incliné sur l'axe de l'anneau et se terminant selon un retour transversal (17) muni à sa périphérie de ladite denture (18).

6. Moyens à rampes selon l'une des revendications 1 à 5, caractérisés par le fait que les zones d'appui (14) sont constituées par l'arête supérieure arrondie d'emboutis disposés en arcs de cercle centrés sur l'axe de l'anneau.

7. Moyens à rampes selon l'une des revendications 1 à 6, caractérisés par le fait que les zones d'appui (14) et les rampes (15) sont centrées par rapport à la largeur de l'anneau.

8. Moyens à rampes selon l'une des revendications 1 à 7, caractérisés par le fait que les rampes (15) sont destinées à coopérer avec des plots (41) portés par le plateau de pression (1) .

9. Moyens à rampes selon l'une des revendications 1 à 6, caractérisés par le fait que les zones d'appui (262) et les rampes (215) sont décalées radialement.

10. Moyens à rampes selon la revendication 9, caractérisés par le fait que les rampes (215) sont destinées à coopérer avec des rampes complémentaires (204) portées par le plateau de pression (1).

## Patentansprüche

1. Rampenmittel für eine Spielnachstellvorrichtung zur Ausrüstung einer Reibungskupplung mit Membranfeder, umfassend umfangsmäßig verteilte Rampen (15, 215), die für das Zusammenwirken mit der Druckplatte (1) der Kupplung bestimmt sind, Auflagemittel, die zur Aufnahme der axialen Belastung durch die Membranfeder (3) der Kupplung bestimmt sind, und eine Zahnung (18, 218), die für ihre drehende Mitnahme bestimmt ist, **dadurch gekennzeichnet**, daß sie aus einem Ring bestehen, der auf einer seiner Flächen Rampen (15, 215) aufweist, die sich umfangsmäßig mit Auflagebereichen (14, 262) abwechseln, die die besagten Auflagemittel bilden.

2. Rampenmittel nach Anspruch 1, **dadurch gekennzeichnet**, daß sich die Zahnung (18, 218) in einer Ebene senkrecht zur Achse des Rings erstreckt.

3. Rampenmittel nach Anspruch 2, **dadurch gekennzeichnet**, daß einer der Auflagebereiche (14, 262) an seinem äußeren Umfang die besagte Zahnung (18, 218) trägt.

4. Rampenmittel nach Anspruch 3, **dadurch gekennzeichnet**, daß sich die besagte Zahnung (218) in der Ebene des Auflagebereichs (262) erstreckt.

5. Rampenmittel nach Anspruch 3, **dadurch gekennzeichnet**, daß der besagte eine der Auflagebereiche (14) an seinem äußeren Umfang durch eine Randleiste (16) verlängert wird, die zur Achse des Rings geneigt ist und entlang einem Querrücksprung (17) endet, der an seinem Umfang mit der besagten Zahnung (18) versehen ist.

6. Rampenmittel nach einem der Ansprüche 1 bis 5, **dadurch gekennzeichnet**, daß die Auflagebereiche (14) aus der abgerundeten Oberkante von Ausbuchtungen bestehen, die in Form von auf die Achse des Rings zentrierten Kreisbögen angeordnet sind.

7. Rampenmittel nach einem der Ansprüche 1 bis 6, **dadurch gekennzeichnet**, daß die Auflagebereiche (14) und die Rampen (15) bezogen auf die Breite des Rings zentriert sind.

8. Rampenmittel nach einem der Ansprüche 1 bis 7, **dadurch gekennzeichnet**, daß die Rampen (15) für das Zusammenwirken mit an der Druckplatte (1) angebrachten Sockeln (41) bestimmt sind.

9. Rampenmittel nach einem der Ansprüche 1 bis 6, **dadurch gekennzeichnet**, daß die Auflagebereiche (262) und die Rampen (215) radial versetzt sind.

10. Rampenmittel nach Anspruch 9, **dadurch gekennzeichnet**, daß die Rampen (215) für das Zusammenwirken mit an der Druckplatte (1) angebrachten komplementären Rampen (204) bestimmt sind.

## Claims

1. Ramp means for a wear compensating device for a diaphragm friction clutch, comprising ramps (15, 215) spaced apart circumferentially and adapted to cooperate with the pressure plate (1) of the clutch, abutment means arranged to receive the axial force exerted by the diaphragm (3) of the clutch, and a set of teeth (18, 218) for driving them in rotation, characterised by the fact that they consist of an annular ring having on one of its faces ramps (15, 215) arranged in circumferential alternation with engagement zones (14, 262) which constitute the said abutment means.

2. Ramp means according to Claim 1, characterised by the fact that the set of teeth (18, 218) lies in a plane at right angles to the axis of the annular ring.

3. Ramp means according to Claim 2, characterised by the fact that one of the engagement zones (14, 262) carries the said set of teeth (18, 218) at its outer periphery.

4. Ramp means according to Claim 3, characterised by the fact that the said set of teeth (218) lies in the plane of the engagement zone (262).

5. Ramp means according to Claim 3, characterised by the fact that the said one of the engagement zones (14) is extended at its outer periphery by a flange (16) inclined on the axis of the annular ring and terminating in a transverse return (17) which carries the said set of teeth (18) at its periphery.

6. Ramp means according to one of Claims 1 to 5, characterised by the fact that the engagement zones (14) consist of the rounded upper edge of press-formed elements disposed in circular arcs centred on the axis of the annular ring.

7. Ramp means according to one of Claims 1 to 6, characterised by the fact that the engagement zones (14) and the ramps (15) are centred with respect to the width of the annular ring.

8. Ramp means according to one of Claims 1 to 7, characterised by the fact that the ramps (15) are adapted to cooperate with pads (41) carried by the pressure plate (1) .

9. Ramp means according to one of Claims 1 to 6, characterised by the fact that the engagement zones (262) and the ramps (215) are offset radially.

10. Ramp means according to Claim 9, characterised by the fact that the ramps (215) are adapted to cooperate with complementary ramps (204) carried by the pressure plate (1) .
